# EUROPEAN PATENT APPLICATION

(11) **EP 2 281 490 A1**
(43) Date of publication of application: **09.02.2011**
(21) Application number: 10171134.9
(22) Date of filing: 28.07.2010
(51) Int. Cl.: A47F 5/02, F16B 12/38

(54) **Display stand for merchandise**

(30) Priority: 29.07.2009 NL 2003308
(71) Applicant: Hörchner Holding B.V., 2641 EA Pijnacker (NL)
(72) Inventor: de Jager, Jeroen, 3911 GV, Rhenen (NL)
(74) Representative: Jansen, Cornelis Marinus

(57) **Abstract**

Display holder (1) for displaying merchandise, provided with at least a single truss (5) which extends substantially in a first direction, a first supporting traverse (7) which extends substantially in a first plane which extends in a second direction transversely to the first direction, and at least a second supporting traverse (9) which extends parallel to the first supporting traverse in a second plane. The first supporting traverse (7) and the second supporting traverse (9) are connected with the at least single truss (5). The first supporting traverse (7) has a first circumferential edge (17) and the second supporting traverse (9) a second circumferential edge (19). The display holder (1) is further provided with at least a single substantially elongated carrier (25) detachably connected to the first and second circumferential edges, while the at least single carrier (25) extends substantially parallel to the first direction and has at least a single article holder (31) for receiving an article of merchandise. A connecting element (23) effects the at least single carrier (25) to be detachably connected to one of the first and second circumferential edges.

## Description

The invention relates to a display holder for merchandise, in particular postcards, flyers or brochures and the like.

Such display holders are generally known from US patent publications US1870643, US 2887232, US3693807, US4322007 and US5462178. Such display means are often used in shops for displaying merchandise and often in a self-service arrangement. In practice, such display means are often provided by the suppliers or producers of merchandise to be displayed thereon and, in order to save on costs of transport, there is the need to supply these display holders to the shops in unassembled form. Here, the problem arises that the shopkeepers cannot be expected to deal with the complicated assembly techniques themselves. Accordingly, in practice, often the wholesaler's representatives or the manufacturer are to carry out these assembly operations. But, still, the expert in the field of sales, such as a representative, is no expert in the field of technical skills. What is more, these people are often dressed up nicely, and they wish to keep their clothes in impeccable state for a visit to a next customer. Therefore, there is the need of display holders that can be assembled in a simple manner and without tools by persons who only have very limited technical skills. Furthermore, display holders are needed that can be easily adapted to circumstances. These wishes can be met to only a very limited extent by a display holder that does not have sufficiently sound connections of component parts. It is known that display holders for picture postcards, the so-called postcard carousels, are put in the street outside a shop during opening hours. At closing time, shop personnel often hastily wheel such postcard carousels inside again. This may lead to rough handling, which may put the quality of the mechanic connections in these displays seriously to the test.

Accordingly, an object of the present invention is to eliminate or improve at least one of the drawbacks of the state of the art. It is a further object of the present invention to provide alternative solutions which can be carried out more easily and which can furthermore be relatively inexpensively manufactured. Alternatively, an object of the invention is to provide the public with at least a useful option.

To that end, the invention provides a display holder for displaying articles forming merchandise, provided with at least a single truss which extends substantially in a first direction, a first supporting traverse which extends substantially in a first plane which extends in a second direction transverse to the first direction, the first supporting traverse being connected to the at least single truss, at least a second supporting traverse which extends parallel to the first supporting traverse in a second plane, the second supporting traverse also being connected to the at least single truss, wherein the first supporting traverse has a first circumferential edge and the second supporting traverse has a second circumferential edge, at least a single substantially elongated carrier, detachably connected to the first and second circumferential edges, wherein the at least single carrier extends substantially parallel to the first direction and is provided with at least a single holder for receiving an article of merchandise, and a connecting element with which the at least single carrier is detachably attached to one of the first and second circumferential edges. Thus, the display holder according to the invention contributes to a simplified assembly and also allows simple changes to be made after assembly. Such a holder can therefore be transported, compactly packaged in separate parts, to the final destination and there be made ready for use even by people with limited technical skills. The connection of the component parts is sufficiently sound to even withstand rough handling.

It is further advantageous when the connecting element is provided with a first and a second snap connection. Here, the first snap connection can connect the connecting element to one of the openings recessed in the first and second circumferential edges. The second snap connection of the connecting element can then effect the connection with an opening formed on the at least single carrier.

In order to achieve this, it may also be advantageous when the connecting element is provided with a middle part and opposite mirror symmetrical first and second side arms. The connecting element can further be provided with symmetrical collapsible first and second sides. Here, also the middle part can have two obliquely placed surfaces movable towards each other, mutually connected by a flexible bridge for forming the second snap connection, such that the two oblique surfaces can be moved towards each other through a push-in movement of the flexible bridge for removing and placing the at least single carrier. With this, by pushing-in the bridge accessible from the outside, the second snap part can be cleared and the carrier be removed, without the risk of the connecting element coming loose from the supporting traverse. Here, it may in particular be preferred to provide a support on the middle part of the connecting element for limiting the push-in movement of the flexible bridge. Here, this support functions as stop.

For attaching the connecting element to the supporting traverses, the opposite first and second side branches are preferably each provided with a flexible arm part and an edge part. Here, the edge part forms the first snap connection. Further, in particular, a transverse part on each of the opposite side branches can be provided with a support of the connecting element against the circumferential edge.

Further, advantageously, the connecting element can be secured against lateral forces relative to the support traverses by the fold-up first and second sides.

The display holder can also advantageously be provided with a rear plate surrounding, with an opening, the transverse parts of the connecting element, which is confined between the at least single carrier and the first and second circumferential edges. The display holder, provided or not provided with these options, can further be formed such that the first and second circumferential edges define a multi-angular structure with one of a triangle, square, pentagonal, hexagonal, heptagonal and octagonal shape. Here, the first and second supporting traverses can be designed as multi-angular plates, while the first and second circumferential edges each define a multi-angular contour.

The at least single truss can especially advantageously be designed as a central axis. The arrangement is such that the multi-angular supporting traverses or plates are disposed for rotation relative to the central axis. Optionally, the display holder can also be designed to be rotational in a different manner. This rotatability can, but does not necessarily need to be about a substantially vertical axis. With rotatability about a vertical axis, in particular a foot may be provided with which the central axis is supported. The foot may optionally be provided with castors.

A further attractive option is to design the different elements of the display holder in wire-form.

The invention also provides a connecting element for use in a holder according to the invention.

The invention will presently be further described with reference to a few exemplary embodiments, such as shown, inter alia in the accompanying drawings. In the drawings:
Fig. 1 shows a possible embodiment of a greeting card carousel according to the invention partly in exploded view;
Fig. 2 shows a detail of a greeting card carousel according to the invention in a somewhat different embodiment as exploded view;
Fig. 3 shows a connecting element for use in the invention in a preformed condition, as obtained after manufacture;
Fig. 4 shows the connecting element of Fig. 3, in the final, formed condition, ready for use; and
Fig.5 shows an enlarged detail of the greeting card carousel of Fig. 1.

The device according to the invention relates in general to a holder for displaying merchandise. In particular, the holder according to the invention is suitable for displaying merchandise having a substantially rectangular, flat form such as, for instance, DVDs, CDs, books, brochures, but in particular also greeting cards and postcards.

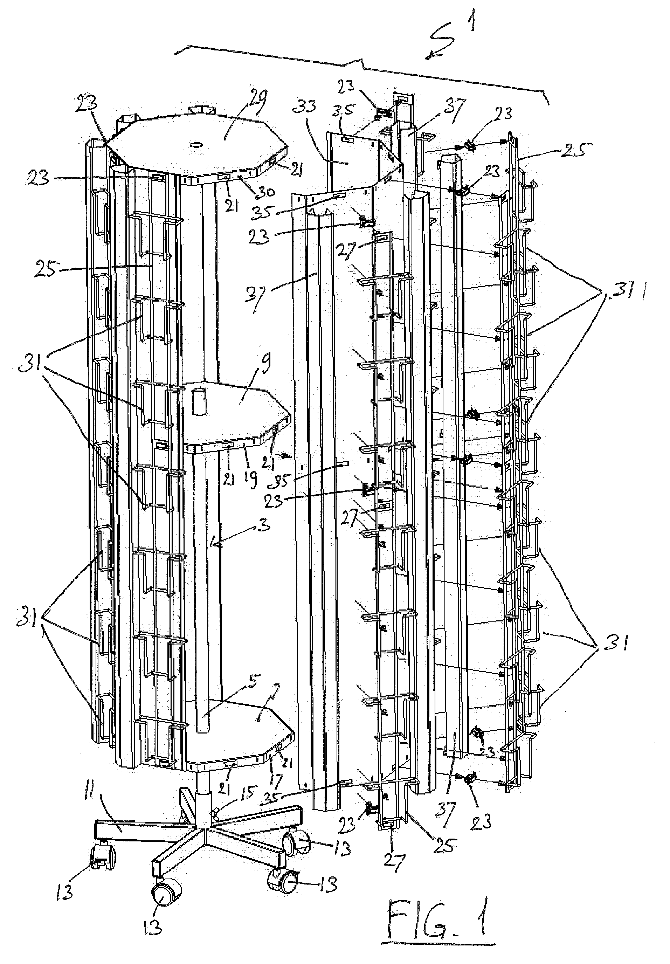

A possible embodiment of the invention according to Fig. 1 is a display holder in the form of a greeting card carousel 1. This greeting card carousel has a base frame 3, which is provided with a central axis 5 which functions as truss and at least first and second plate-shaped supporting traverses 7, 9, which are or are not removably attached to the central axis 5. The central axis 5 can be mounted on a foot 11, which, if desired, can be provided with castors 13. The base frame 3 can be detachably mounted on the foot 11 and be attached thereto with a clamping device and/or a wing screw 15. Each of the first and second plate-shaped supporting traverses 7, 9 is provided with a circumferential flange 17, 19, respectively. The first and second circumferential flanges 17, 19 can each define a multi-angular contour such as triangular, square, but also octagonal as shown in the embodiment of Fig. 1. Also, if desired, the first and second circumferential flanges 17, 19 can also define a circular or ovoid circumferential shape. In the example shown, the supporting traverses provided with the circumferential flanges are manufactured from metal plate. However, the skilled person will recognize that these supporting traverses can just as well be manufactured from metal wire, wood or plastic. Each of the first and second supporting traverses 7, 9 is provided at its respective circumferential flange 17, 19 with a number of openings 21 for each time attaching therein a connecting element 23. Then, to these connecting elements 23, a number of substantially elongated carriers 25 are attached with corresponding openings 27 for the connecting elements 23.

In Fig. 1, it can further be seen that the display holder 1 can be designed with a third plate-shaped supporting traverse 29, that needs not necessarily be connected to the central axis 5, but is cantilever attached by means of the upper corresponding openings 27 of the carriers 25 and connecting elements 23. This supporting traverse too has a circumferential edge or circumferential flange 30.

The carriers 25 can be of wire-design for receiving greeting cards or picture postcards or similar merchandise and are each provided with a series of article holders 31 for receiving greeting cards or picture postcards or similar merchandise. The attachment of the article holders 31 to the carriers can be of conventional design with, for instance, a permanent welding connection, but can, if desired, be of detachable design by also using clips, as with the connecting elements 23. In particular, a design can be considered where the vertical carriers 25 are formed as a plate which is detachably connected to the supporting traverses 7, 9, 29. In Fig. 1, it can further be recognized that, if desired, for the further finishing of the display holder, a cardboard or plastic rear plate 38 can be provided. To that end, the rear plate 33 has recesses 35 which correspond with the openings 21 in the supporting traverses 7, 9, 29 and the corresponding openings 27 in the carriers 25. The rear plate is optional and, when used, is confined between the carrier 25 and the circumferential edges 17, 19, 30 of the traverses 7, 9, 29. The recesses 35 in the rear plate surround the connecting elements 23 and are also centred by it.

In addition to the rear plate 33, also a possibility is provided for arranging the corner standards 37 between each two neighbouring carriers 25. These corner standards 37 can be attached to the rear plate 33 by a suitable connecting means, presumably familiar to the skilled person. These corner standards can also be manufactured from the same material as the rear plate 33, for instance from cardboard or plastic. A design can be considered where the carriers 25, which are preferably to be provided vertically, are designed as a plate set all around, which is or is not detachably connected to a single or several, in this case preferably horizontally oriented supporting traverses 7, 9, 29. With such a design, it is particularly advantageous to provide the article holders detachably on the plate-shaped carriers by means of the clips, such as the connecting elements 23.

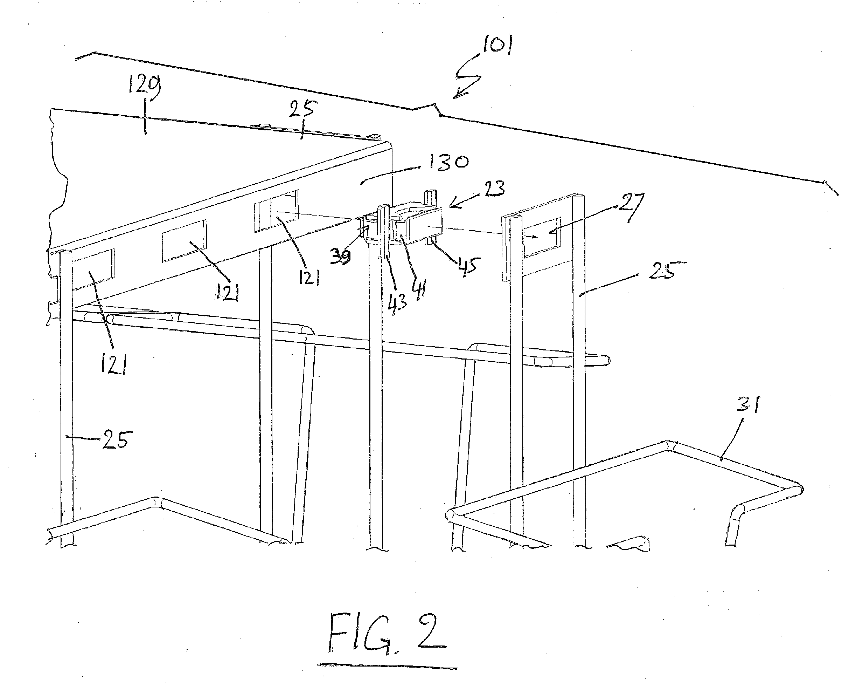

Fig. 2 shows an enlarged detail of a slightly modified embodiment of a display holder 101 according to the invention. The display holder 101 has a substantially square contour, in that the supporting traverse 129 has a square circumferential edge 130, in contrast to the octagonal shape of the corresponding supporting traverse 29 of Fig. 1. In the embodiment according to Fig. 2, the circumferential edge 130 is provided on each of the sides defined thereby with more than a single opening 121, so that per side of the, in this case square, display holder 101, more than one carrier 25 can be attached.

More particularly, Fig. 2 shows the cooperation between the connecting element 23 with the openings 121 and 27 in the circumferential edge 130 and the carrier 25, respectively. The connecting element 23 has a first portion 39 with which it can be snapped into the opening 121 (or 21 in the embodiment of Fig. 1) of a supporting traverse. A second portion 41 of the connecting element 23 is designed for receiving thereon the corresponding opening 27 of the carrier 25 by means of a snap connection. The first and second portion 39, 41 of the connecting element can therefore be characterized as first and second snap connections. The first portion 39 of the connecting element also has a first and second transverse part 43, 45 for limiting the insertion depth of the connecting element 23 with respect to the circumferential edge 130, 17, 19, 30, respectively. These transverse parts 43, 45 can further be used for centring a recess in a rear plate (such as 33 in Fig. 1) around them.

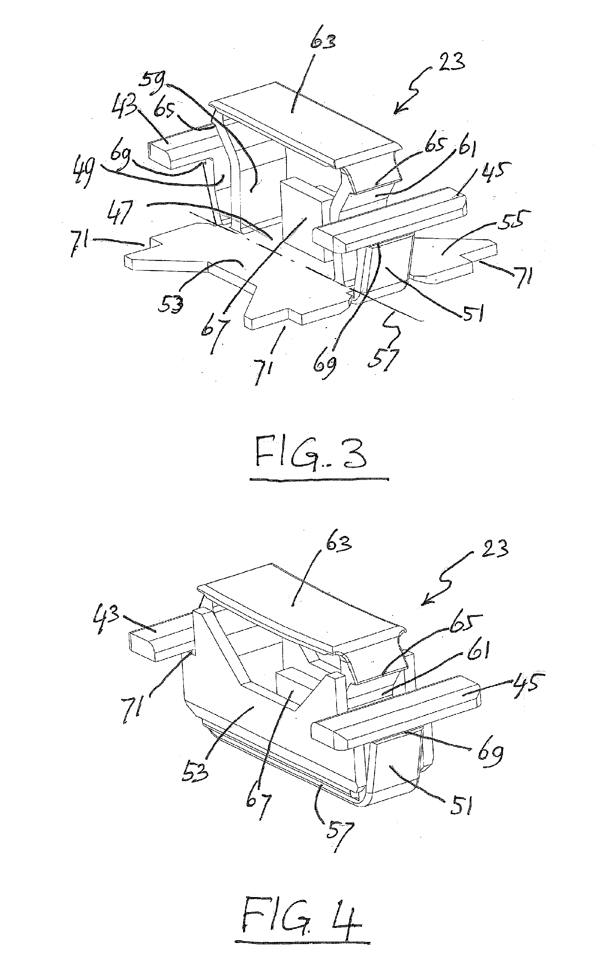

Presently, the connecting element 23 will be described in further detail with reference to Figs. 3 and 4. In Fig. 3, the connecting element 23 is shown in the configuration in which it is obtained through, for instance, injection molding of plastic. As such, the connecting element 23 has a centre part 47 with, extending away therefrom, mirror symmetrically arranged flexible first and second side arms 49, 51, as well as fold-up first and second sidewalls 53, 55. The first and second sidewalls 53, 55 can be folded up elastically along a respective bending line, one of which is indicated in Fig. 3 with reference numeral 57. Further, from the centre part 47, also, a further first and a second oblique surface 59, 61 extend. The obliquely arranged first and second surfaces 59, 61 are mutually connected at their top by a flexible bridge 63. Each of the obliquely arranged surfaces 59, 61 has a snap edge 65, of which one can be seen in Figs. 3 and 4, but of which an opposite variant is located at the opposite side of the connecting element 23. The snap edge 65 serves for attaching therebehind the corresponding opening 27 of the carrier 25. To that end, the first and second obliquely arranged surfaces 59, 61 can be moved towards each other elastically by pushing-in the bridge 63. In order to prevent the bridge from being pushed in too far, an additional support 67 can be provided on the middle part 47, which forms a stop for the flexible bridge 63.

The flexible first and second side arms 49, 51 too have an obliquely set flexible part, which is finished by a similar snap edge 69, which, with the nearby first or second transverse part 43, 45 defines a groove for receiving an edge of one of the openings (21, 121) of the supporting traverses (7, 9, 29, 129).

Prior to mounting the connecting element 23 in the openings 21, 121 of the supporting traverses 7, 9, 29, 129, the fold-up sidewalls 53, 55 are folded in through elastic bending along the respective bending lines 57. Here, corner recesses 71 in the fold-up sidewalls 53, 55 limit the inward space to move for the transverse parts 43, 45 and hence the snap edges 69. The thus obtained condition is shown in Fig. 4. In this condition, the connecting element 23 can be introduced into in one of the openings 21, 121 of the supporting traverses. Here, the folded-up sidewalls 53, 55 provide that the connecting element 23 is secured in mounted condition against forces applied laterally thereto. Thus, the first snap part 39 is defined. After the connecting elements 23 are provided on the respective supporting traverses, a carrier 25 can be attached with its corresponding openings 27 on the second snap part 41 which is substantially formed by the first and second obliquely set surfaces 59, 61 and the snap edges 65. Providing the carriers 25 can take place in a simple manner, after the connecting elements 23 have first been attached to the supporting traverses. Also after attaching the carriers 25 to the base frame 3, they can always be easily removed for, for instance, placing a rear wall 33, or a different rear wall 33, but also for exchanging the carriers 25 for differently formed carriers for other merchandise. As, for removing the carriers 25, the flexible bridge 63 can simply be pushed-in, it is also achieved that the connecting elements 23 cannot come loose from the supporting traverses of the base frame 3.

Although the starting point in the described embodiments is that the carriers 25 are attached both at the top and the bottom by connecting elements 23 to the respective supporting traverses, this is in no way required. The skilled person will immediately recognize that one of the connecting elements 23 can simply be replaced by a hook-in connection. Such a hook-in connection can be formed by a hook formed on a top or bottom end of the carrier 25, which hooks into the respective opening 21, 121 of a top or bottom traverse. A kinematic reversal of such a hook and opening is also one of the options that are within the reach of the skilled person.

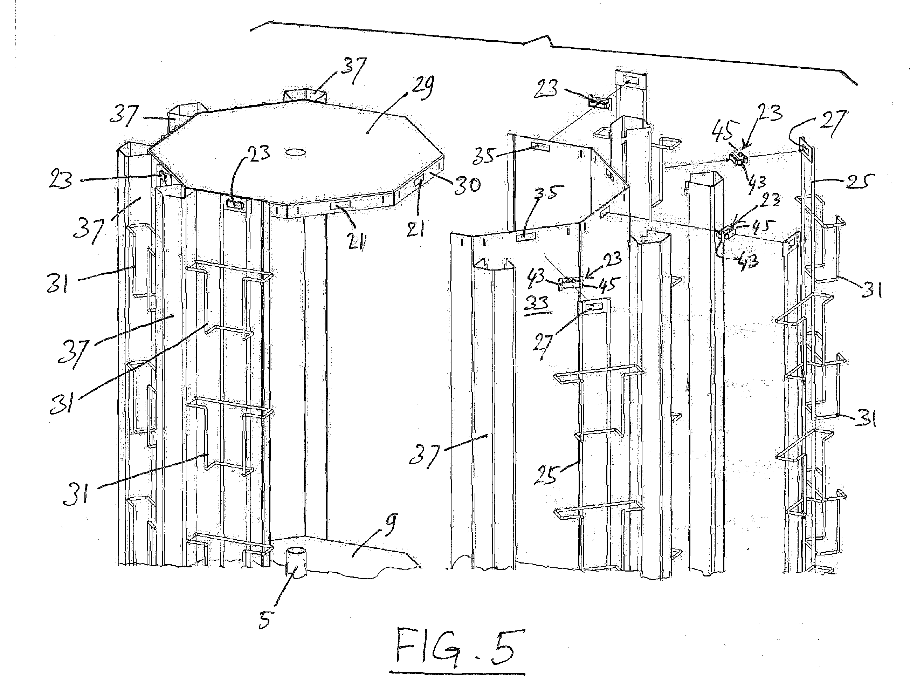

For a proper understanding of the invention, brief reference is made to Fig. 5 which shows an enlarged detail of the embodiment of Fig. 1. For an explanation of the reference numerals, reference is made to the above description. The connecting elements 23 as drawn in the right-hand portion of Fig. 5, i.e. between the rear wall 33 and the carriers 25, give the impression that they are mounted, together with the rear wall, to the supporting traverses 9, 29. Although this is an option, it has appeared in practice that it is advantageous to provide the rear wall, if present, only after the connecting elements 23 have already been attached to the supporting traverses. The recesses 35 in the rear wall 33 can then simply be centred about the transverse parts 43, 45 of the connecting elements 23. Apart from the rear wall 33 being optional, it can also, other than represented in Figs. 1 and 5, be designed as a separate element, per side or per carrier 25. Both the rear wall 33 and the corner standards 37 can be omitted or be provided at will. In case of special promotional actions, deviating rear walls can be rapidly provided. The carriers 25 can be removed individually by pushing-in the bridge part 63 of the connecting elements 23 that is accessible from the outside. After placing the rear wall 33, the carriers 25 can be provided by snapping them back on. Further, it is possible to exchange the carriers 25 for carriers formed differently for varying the displayed merchandise.

In the variant embodiments described, a rotatable display holder extending in vertical direction is concerned. Nevertheless, the invention also provides display holders which extend substantially horizontally and which are rotatable about a horizontal axis. Such display holders can be attached to a wall by spacers. This does not alter the principle of the rapidly attachable and exchangeable carriers 25.

Likewise, a display holder rotatable about a vertical axis does not necessarily have to be provided on a foot such as 11, but such a holder can also be attached with spacers to a wall surface.

As appears from the above, the invention provides in particular a display holder 1 which has a number of sides and is provided with one or more substantially vertically extending carriers 25 per side, designed as strips, which strips are removable. The holder 1 is further provided with a foot 11, equipped or not with wheels 13 (wheeled or not wheeled), a central axis 5, at least two substantially horizontally extending, multi-angular, or optionally round plates 7, 9, 29 or 129, serving as supporting traverse, which are rotatable relative to the central axis. Each of the one or more strips 25 is connected by means of a connecting element 23 to a side (17, 19, 30, 130) of each multi-angular plate and equipped with at least a single holder 31 for the merchandise to be displayed. The invention also provides for placement, by means of clips such as the connecting elements 23, of several article holders on a strip 25. Here, for instance a design can be involved where the vertical carriers or strips 25 are replaced by a plate set all around, which is detachably connected to a horizontal crossbeam. The connecting element 23 is provided with a first and second snap connection or snap part 39, 41. The first snap connection 39 connects the connecting element 23 to the multi-angular plate and the second snap connection 41 connects the strip 25 to the connecting element 23. The connecting element 23 is further provided with a middle part 47, symmetrical first and second side branches 49, 51 and symmetrical, fold-up first and second sides 53, 55. The fold-up sides 53, 55 simplify in particular the injection molding technique of the connecting element 23, but also contribute to the resilient character. The middle part has two obliquely set surfaces 59, 61 which are mutually connected by a flexible bridge 63. The two oblique surfaces can be moved towards each other by pushing the bridge 63 in, so that the strips 25 can be placed or can be removed. The pushing-in movement of the bridge 63 can then be limited by a support 67, which is provided in the middle of the connecting element 23. Further, the opposite mirror symmetrically designed first and second side branches 49, 51 are provided with a flexible arm part and an edge part 69. The edge part 69 forms the actual snap connection 39 with which the connecting element 23 can be attached to the multi-angular plate. A transverse part 43, 45 on each of the side branches 49, 51 provides a support of the connecting element against the multi-angular plate and can also be used for centring a rear plate 33 therein by means of an opening or recess 35. Such rear plates, which can be designed in cardboard or other suitable materials, are then confined by the strips 25 connected to the connecting element.

Prior to mounting, the symmetrical, fold-up first and second sides 53, 55 are folded up and the connecting element 23 is thus secured from lateral forces in the multi angular plates.

It is presumed that the design and the action of the present invention clearly appear from the above description. The invention is not limited to any embodiment described herein and, within the power of the skilled person, modifications are possible which are understood to lie within the scope of protection. Also, all kinematic reversals are understood to be included in the scope of protection of the present invention. Terms such as "consisting of", when used in this description or the accompanying claims, should not be construed to be an exhaustive enumeration, but should be understood to have an inclusive meaning. Terms such as: "means for" should be read to mean: "component formed for..." or "element constructed for"... and are to be understood to also comprise all equivalents for the described constructions. The use of terms such as: "critical", "advantageous", "desired" etc. is not intended to delimit the invention. Furthermore, also properties not specifically or expressly described or required in the construction according to the present invention can be comprised without departing from the scope of protection of the invention.

## Claims

1. A display holder for displaying articles forming merchandise, provided with:
at least a single truss which extends substantially in a first direction,
a first supporting traverse which extends substantially in a first plane which extends in a second direction transversely to the first direction, the first supporting traverse being connected to the at least single truss,
at least a second supporting traverse which extends parallel to the first supporting traverse in a second plane, the second supporting traverse also being connected to the at least single truss, wherein the first supporting traverse has a first circumferential edge and the second supporting traverse has a second circumferential edge,
at least a single, substantially elongated carrier detachably connected to the first and second circumferential edges, wherein the at least single carrier extends substantially parallel to the first direction and has at least a single holder for receiving an article of merchandise, and
a connecting element with which the at least single carrier is detachably connected to one of the first and second circumferential edges.

2. A display holder according to claim 1, wherein the connecting element is provided with a first and a second snap connection.

3. A display holder according to claim 2, wherein the first snap connection connects the connecting element to one of openings recessed in the first and second circumferential edges.

4. A display holder according to claim 2 or 3, wherein the second snap connection connects the connecting element to an opening formed on the at least single carrier.

5. A display holder according to any one of claims 1 - 4, wherein the connecting element is provided with a middle part and opposite, mirror symmetrical first and second side arms.

6. A display holder according to claim 5, wherein the middle part has two obliquely set surfaces movable towards each other, which are mutually connected by a flexible bridge for forming the second snap connection and wherein the two oblique surfaces can be moved together by a push-in movement of the flexible bridge for removing and placing the at least single carrier.

7. A display holder according to claim 6, wherein on the middle part of the connecting element a support is provided for limiting the push-in movement of the flexible bridge.

8. A display holder according to one of claims 1 - 7, wherein the connecting element is further provided with symmetrical, fold-up first and second sides.

9. A display holder according to claim 8, wherein the opposite first and second side arms are each provided with a flexible arm part and an edge part.

10. A display holder according to claim 9, wherein the edge part forms the first snap connection.

11. A display holder according to claim 9 or 10, wherein a transverse part on each of the opposite side arms provides a support of the connecting element against the circumferential edge.

12. A display holder according to any one of claims 1 - 11, wherein the connecting element is further provided with symmetrical, fold-up first and second sides.

13. A display holder according to claim 12, wherein the connecting element is secured from lateral forces relative to the supporting traverses by the fold-up first and second sides.

14. A display holder according to claim 11, wherein the display holder is further provided with a rear plate surrounding the transverse parts of the connecting element with an opening, which plate is confined between the at least single carrier and the first and second circumferential edges.

15. A display holder according to any one of claims 1 - 14, wherein the first and second supporting traverses are designed as plates.
